# EUROPEAN PATENT SPECIFICATION

(11) **EP 0 895 528 B1**
(45) Date of publication and mention of the grant of the patent: **30.10.2002**
(21) Application number: 97918079.1
(22) Date of filing: 28.04.1997
(51) Int. Cl.: C08L 91/08

(54) **COATING AND CONSTRUCTION MATERIAL AND APPLICATIONS THEREOF**
BESCHICHTUNGS- UND BAUMATERIAL UND DEREN ANWENDUNGEN
MATERIAU DE REVETEMENT ET DE CONSTRUCTION ET UTILISATION DE CELUI-CI

(30) Priority: 25.04.1996 DK 49896; 21.02.1997 DK 19397
(43) Date of publication of application: 10.02.1999
(73) Proprietor: Sorensen, Frede, 8870 Langa (DK)
(72) Inventor: Sorensen, Frede, 8870 Langa (DK)
(74) Representative: Nielsen, Leif
(86) International application number: DK9700193
(87) International publication number: WO97041175

(56) References cited:
- DE-A- 1 546 298
- GB-A- 1 245 761
- US-A- 3 440 194
- PATENT ABSTRACTS OF JAPAN, Vol. 13, No. 255, C-606; & JP,A,01 060 659, (NIPPON SEIROU K.K.), 7 March 1989.

## Description

The present invention relates to a new type of material and differnt applications thereof, viz. a wax material with particular qualities.

Wax is known as a pure natural product, e.g. as bee's wax, but for technical applications in larger amounts it is necessary to rely on artificially produced wax, which is derived from mineral oil, yet still being a natural product, best known as paraffine wax. It is widely used for candies which consist of fully refined paraffine wax with a melting point in the range of 48-62°C. This wax is relatively soft; its hardness is typically expressed by the term 'penetration', which refers to the intrusion depth of a measuring needle into the material, in the present connection according to ASTM standard D 1321, the penetration figure of the paraffine wax ranging from 30 to 60, higher the softer the material is. The wax is water-repellent and chemical resistant as well as totally degradable in the nature, and it is used also for various impregnations, e.g. of paper and ropes, the wax also having a certain lubricating effect. However, due to its softness and low melting point, the wax has only limited possibilities for technical applications.

An example of such a wax is known from JP-A-64-060659 which comprises a parafin wax as a principal component and optionally mixed with a polyolefin wax, whereby for the intended uses, i.e. cold cup coating, bonding paper to metal at room temperature etc., the wax has good characteristics.

It has been found, however, that in mixing the wax with various polymers and other substances it is possible to in- crease the hardness and the melting point of the wax to such a degree that this modified wax, would be usable for further applications, viz. mostly as so-called hot melt coating on foodstuff cartons, as a coating for avoiding intrusion of oxygen from the outside and extrusion of moisture from the inside, the product still being fully environment friendly. With the increased wax melting point, for example, a foodstuff carton may be left temporarily in sunshine without the wax coating flowing out in the carton. Correspondingly, the wax exhibits an increased hardness, now typically with a very low penetration value of only 8-15, whereby it is less supple, yet still readily flexible. In connection with porous surfaces it is still usable for impregnation, but apart from the said carton coatings the modified wax has not found extensive use on other technical areas.

In connection with the present invention it has been found that it is possible to modify the wax material still further, viz. for attainment of a further increased hardness in the penetration range 0.5-6 which, in connection with a correspondingly increased melting point, opens for a long row of further possibilities of use, as the material now appears as 'hard' and wear resistant at ambient and even higher temperatures. The material, then, is also more brittle, but this can be highly advantageous, confer the following more detailed description of the modified material, now designated 'hard wax'.

At normal temperatures this hard wax does not exhibit any conventional wax character, as it occurs as a neutral, hard solid, which is cheap, emvironment friendly, corrosion resistant and workable, while also having good resistance to wear. In particular due to its ability to be cast out as a low viscid liquid in the temperature range of 100-200°C, it is well suited to form castings without heavy requirements for the form equipment and with the possibility of a high degree of detailing. The possibilities of use are so numerous that they should not be further listed here. It should be mentioned that the material when cast as a thin shell is or can be toughly resiliently bendable. By way of example, the mouthing of a cast drinking cup with a wall thickness of approximately 1 mm may be pressed together without the material breaking, while the mouthing willingly returns to its original shape. The wax may be coloured as desired and may also be cast into plates or blocks, optionally for further working. All waste material from the working will be fully reusable. The working may be effected in conventional manner, but also with the use of heat, e.g. from a glowing wire. For the material, it is in fact more relevant to speak of its hardness (Shore) rather than its softness (penetration).

In connection with the invention it has been found, surprisingly, that there are very good reasons for increasing the degree of modification of the wax noticeably further than to the prior art level. Apparently there are no special or principal difficulties in doing so, inasfar as the desired result can achieved already by an increased admixing of the substances, primarily polymers, which are used already for the production of the semi hard wax. In the relevant technical area the experts possess great knowledge as to the effect of the different additives, e.g. for adapting the wax to different purposes of use, and of course it cannot be excluded that for the formation of the hard wax there exist or can be developed particularly well suited additives, such that also the hard wax can be modified for different applications. However, in the present connection it is deemed unnecessary to describe this in more detail, as it is definitely a matter of expert knowledge.

For the invention it has been essential to make sure that it is in fact possible to produce the hard wax, based on known principles, such that it will still be 100% environment friendly.

While the hard wax itself may thus find widespread use for many kinds of products, it will also have a high degree of applicability in other ways, which will be further discussed in the following.

An essential application is as the so-called hot melt coating, i.e. as a protective and partly impregnating coating on surfaces of many different types. In fact, it has been a starting point for the invention to provide a surface protection of concrete surfaces, because at many places there are problems with respect to corrosion of concrete surfaces, in particular by the action of acid media such as acid rain and acid moisture in sewer pipes. It is known that these surfaces may to some degree be protected by application of certain coating materials, but it seems true that the more efficient of these materials during application, use and removal are definitely not environment friendly and, besides, are relatively expensive.

The hard wax according to the invention is extremely well suited for this application, inasfar as with a suitable heating it is easy to apply onto the concrete surface, where it will easily intrude into the pores and micro cracks thereof, whereafter, in cooled condition, it will occur as an almost stone hard and wear resistant coating, which is totally water-repellent and therewith corrosion protective because of its own resistivity to chemicals.

Further experiments with the invention have shown that the hard wax also is well suited as a wear resistant and anticorrosivecoating on metal surfaces, for example on cast iron, but also on iron and steel surfaces generally. As the wax may be dyed as desired, it will thus be possible in one operation to carry out both a corrosion protective priming and a final painting of the surface. However, it will still be possible to finally treat the hard wax layer with a paint coating, e.g. of the type "metallic" as known from the car industry.

Correspondingly, the hard wax may be used as a wear and weather resistant coating on wooden surfaces, e.g. on outer doors. It will apply generally that local damages such a scratches can be mended just by a heating of the wax layer in the relevant area, e.g. by means of a hot air blower or a blowlamp, whereby the material will flow together in a smooth manner in the scratch area.

For the application of the wax, the surface to be treated has to be free of moisture, as otherwise a boiling would occur that would jeopardize a good bonding of the wax. In practice this implies that any surface to be treated should be exposed to heating to such an extent that all moisture has boiled away or evaporated prior to the application. Such a heating, e.g. with a hot air blower or a blowlamp, should even be effected to the extent that the surface temperature approaches the melting temperature of the wax for ensuring that the low viscid wax can intrude into the pores present in surfaces of almost any type, including smooth metal surfaces. At the same time it will be ensured that the surface is degreased before the application.

For the coating of articles which already have the required high temperature, e.g. still hot metal castings, the wax may be applied in a pulverized, cold condition, optionally even as an aqueous wax emulsion. It is a further possibility to coat a cold or semi warm article with wax powder or granules, with or without filler material and heated to the sticking point, whereafter the wax layer is brought to flow together by heating as with known powder lacquering.

For the surface coating purpose, the wax can advantageously be mixed with graphite or iron oxides and, optionally, earth colours or fat colours, whereby it is possible to achieve a particularly good durability and a stable colouring.

A further field of application of the hard wax according to the invention is the use as a bonding agent for admixed reinforcement or filler materials.

Thus, the hard wax will be an environmentally very advantageous substance in connection with all possible mineral fiber products, in which typically polyester has been used for the bonding of the strength giving filaments, particularly in glass fiber materials. The hard wax is a very effective adhesive which, at least in many connections, may replace the polyester, whereby already in the production phase the environmental qualities of the material prove advantageous in that there will be no special requirements to ventilation or breath protection. As with all other applications, it should of course be acceptable that the resulting material will be unstable when heated to temperatures above some 100°C, this, however, leaving a broad row of practical possibilities of use.

It is equally important that the hard wax is well applicable as a moulding or coating material in admixture with granular fillers such as sand, as this may obviously contribute to low production costs and extra hardness and wear resistance where this is desired. Also other characteristic properties such as lightness or cuttability can be aimed at, highly influenced by the applied additional materials.

While in some connections it will be disqualifying that the material is not shape stable at temperatures essentially above the usual ambient range, there will be instances in which this is directly advantageous. As an example, reference is made to the metal casting technique and its associated use of casting moulds and so-called casting cores, where in particular the latter are made of moulding sand in admixture with directly dangerous bonding agents which, in the relevant forgeries, require excessive safety measures such as highly effective exhaustion systems. The individual moulds or cores can be used once only, and owing to their contents of dangerous substances they should after each casting be conveyed to special deposition areas for dangerous waste, in quite large amounts.

The invention will provide for a marked shift in this picture, as it may be possible to produce the cores/moulds of a sand material bonded solely by the use of an environmentally neutral wax material according to the invention. At the outset, such a material mixture will be willingly shapeable by a suitable semi high temperature in any model mould, whereafter it sets to a rigid state at room temperature.

When the same core or mould body is later on operatively exposed to the marked higher temperature of the moulding metal the wax, of course, will be heated to above its melting point, but it is here decisive whether the surface contact can be established rapidly enough to condition that the moulding metal reaches to solidify by its surface contact with the core/mould before the latter is thermally brought to an unstable state. It has been found that it is possible in many instances to use cores/moulds made in accordance with the invention, and a very important result is that the same cores or moulds, when used, can be melted for direct reuse, without in any way being transported to some deposition area and still without any kind of internal environmental problems.

It will be possible to prepare moulding materials by coating the filler material, e.g. sand, with the hard wax, whereafter such a material may later on be filled into a desidered mould and be heated for flowing together therein.

Correspondingly, such a material can be used for other moulding purposes, for example for a supportingly filling out of a cavity which is left in connection with the raising of a well frame body. The viscosity of the material can be varied all according to the heating temperature, but also for a coated loose material as well as for the pure wax in a granular state it will apply that the material will remain loose under all normal climatic conditions.

As a basis for further possibilities of application of the material according to the invention it should be mentioned that by a melting together of the wax coating of only semi large particles, e.g. larger grains of sand, it is possible to produce block or plate bodies of a porous type, which will allow for a throughflow of air, but resist an intrusion of water occurring with some surface tension. This will be usable for different purposes, e.g. for filter materials and for soil covering at places where plant growth is undesired.

The hard wax has a melting temperature considerably higher than that of conventional wax, e.g. 100°C versus 50°C. This is significant in connection with normal climatic impacts on the wax, inasfar as a hard wax according to the invention will generally be fully resistant towards climatic influences, what usual wax is not. An illustrative exmple is that the invention has been found interesting in connection with fire safety closing of garbage bins in special surroundings, where a carrier frame above the bin holds a pivot lid, which is held in its open position by way of wax adhesion. In case of fire, the wax will soon melt and free the lid to drop down, but the problem is that this may also happen by purely climatic influence on hot days or in direct sunlight. With the use of a modified wax with a melting temperature of of e.g. 80-110°C the fire release will take place practically as efficiently, while the troublesome incidental releases will be entirely avoided.

The relatively high melting temperature will also be of importance for the applicability of the modified wax as a binder in cast products in general, as these will then be fully climate resistant. The wax may be used for the bonding of all possible filler materials that can resist the temperature required for the casting process, e.g. about 150°C. With the use of a filler material of stone it is bossible to produce a "wax concrete" that will be usable for many purposes, e.g. for the casting of floors or floor elements for animal stables, where the floor will then be resistant to the urine of the animals.

Hereafter, a special and likewise important aspect of the invention should be referred to, viz. the application of the hard wax for temporary surface coating of material particles, the substance of which should be delivered to the surroundings in a retarded manner. Presumably, a conventional wax material will be unsuitable for this purpose, because it will encapsulate the active material to the effect that the latter will be totally isolated from the surroundings until the wax layer itself is degraded, e.g. by the influence of earth bacteria. In connection with the invention it has been found that in treating fertilizer granules with the hard and quite inexpensive wax material, i.e. in bringing the granules briefly in contact with the melted wax, the result is achieved that the fertilizer upon being spread on the ground delivers its active substances with a marked retarded or long term effect. The fertilizer is rendered immune towards rapid washing out in connection with rain showers, and it fully retains its active effect over a long time, this suggesting a solution of heavy economical and environmental problems in the agriculture.

The reason for this effect is not yet fully clear; it is a qualified proposal that in the hard and thin wax film around the particles crack formations will occur, which enable a slow delivery of the active substances in aqueous solution, without heavy rain showers changing this picture noticeably.

Another important finding is that the earth bacteria over the time will effect a complete degrading of the non-toxic wax material whereby, over the years, there will be no accumulating build-up of foreign matter in the ground.

This is suggestive of a marked reduction of the use of fertilizers and a still more marked reduction or perhaps total elimination of the washing out thereof, as widely discussed in the present years.

In quite the same manner it will be advantageous to encapsulate granular weed killers for achieving both a long term effect thereof and a strongly reduced washing out in the ground.

For such wax coated materials used in warmer open air it is advantageous - or rather simply conditionary that the wax should have a relatively high melting point, preferably above 70°C, such that a clogging or baking together cannot take place, e.g. in sacks exposed to sunlight. Another important advantage is that the hard wax is not adhering, as a granular material will thereby maintain its 'free' character for use e.g. in spreading machines.

Moreover, it will apply in general that the wax encapsulation will render the materials non-dusting whereever they are reloaded or brought out.

The coating of the granules may be effected by a brief bringing together of the granulated material and the melted wax, whereafter the material is subjected to a violent agitation in air, preferably in cold air, e.g. by whipping or in a rotary drum, until the thin wax films have cooled sufficiently to be non-adhering. It is supposed that the wax can be applied also by subjecting a falling flow of the granules to an injected flow of atomized low viscid wax. For certain applications it may be an acceptable or even preferred result that the granules may hereby not be entirely surrounded by the wax.

Another area, in which a correspondingly useful effect of a hard wax coating has been found, relates to the fighting of ice slippery roads by means of road salt. With the use of salt coated by a film of hard wax a noticeable long term effect of the salt is achieved. Some wax remnants will remain on the road, as the degrading will take some time, but it is expected that these remnants will be collected in the small cavities of the road surface, whereby they will even protect the cavities against salt intrusion. The coated salt will be directly applicable on gangways, bicycle paths and parking places. Also other granular materials may be relevant, e.g. washing powders.

It should be noted that the wax material may qualify as a "food grade" material, i.e. as a totally non-dangerous substance, which may then also be applicable as a coating material on medical drystuff preparations for human or veterinarian use, for achieving a retarded medicine delivery by administration into the digestion system, or, respectively, for retarding the degrading of e.g. fish fodder.

At the same background the material will be applicable for all relevant kinds of packing materials for foodstuffs.

It should be mentioned that the material according to the invention, with suitable fillers, will be very well suited for sculptural purposes, both in connection with casting and working, partly because the products will be climate resistant and partly because in the working it is possible to add material by melting it against an existing surface portion.

The wax material itself is not well heat conducting, and even though it can be mixed with particles such as aluminium chips that will increase the heat conductivity, it will be possible to take advantage, e.g. in the furniture industry, of the fact that a wax filled surface layer e.g. on a metallic support will act "warm" and very touch friendly, now without being in any way wax-sticky. This is believed to open up for new and advantageous construction possibilities in the furniture industry, while also giving rise to interesting aspects in many other technical fields.

Common to all applications will be that the final result is an advantageous product that will be totally degradable in the nature without the slightest damaging influence thereon, but yet highly resistant as long as it is kept free of the degrading earth bacteria and from higher temperatures. This widely corresponds to the conditions of use of another construction material used through thousands of years, viz. wood, now only appearing also as a mouldable and impregnating material.

It has been mentioned that the wax may be dyed by environmentally neutral earth and fat colours, of which the latter are available in all possible nuances. It is hereby an advantageous possibility to use the wax as a coating on on sand or other granulates to be laid out in a coloured condition e.g. on tennis fields or other places, where the colour layer will be completely non-dangerous and where the hard wax will ensure that the area remains penetratable for water.

It has also been briefly mentioned that the wax can be used in an aqueous emulsion for the coating of hot objects. It will be appreciated, however, that the material in an emulsified state will condition still further application posssibilities.

There is already a highly developed technology about bitumen emulsions, and since wax is a related material it is expected that an applicable knowledge e.g. with respect to breaking control is already at disposal.

It should be mentioned that based on the invention a wax material has been produced as a basis for further experiments with the coating of cast iron. The material, produced by Mobil Oil Denmark A/S, is denoted "Volcoplast 8524", and it has been used with good results for more of the disclosed applications. Important material data are as follows:

| | | |
|---|---|---|
| Softening point | 100-110°C | ASTM E 28 |
| Penetration, 1/10 mm 25°C | 2-6 | ASTM D 1321 |
| Viscosity, mPA.S 130°C | 280-380 | ASTM D 3236 |
| Colour | L 0.5 | ASTM D 1500 |

It will be understood, however, that the invention is in no way limited to the use of just this material.

## Claims

1. A construction, moulding or coating and/or impregnation material of the type "modified wax", preferably based on paraffine wax which, e.g. by admixture of polymers, exhibits increased hardness and a higher melting point than natural wax, **characterized in that** the wax material is so widely modified by means of environmentally neutral additives that it appears as a hard material, with a penetration value below 6, preferably in the range 0.5-4, according to ATSM standard D 1321, or, respectively, with a melting point above 70°C, preferably in the range of 80-120°C.

2. A material according to claim 1, **characterized in that** it appears as a plate or block material for further machining into utility objects.

3. A material according to claim 1, **characterized in that** it appears in a moulded shape as a utility object, optionally in admixture with filler material.

4. A material according to claim 1, **characterized in that** it appears as a corrosion protective coating material on surfaces of other materials such as concrete, metal or wood.

5. A material according to claim 1, **characterized in that** it appears as a granular material for moulding or laying out, with or without incorporated filler material.

6. A material according to claim 1, **characterized in that** it appears as a fully or partly surrounding film coating on particles of other materials, which are desired to deliver active substances in a retarded manner.

7. A material according to claim 6, characterize in that it appears as a coating on granular material such as artificial fertilizers, washing powder, road salt or other materials with a desirable long term effect.

8. A material according to claim 1, **characterized in that** it appears as a melting fuse material in connection with fire or overheating.

9. A material according to claim 1, **characterized in that** it appears as a coating on particles to be bonded together by heating to melt the wax.

10. A material according to claim 1, **characterized in that** in connection with filler material it forms an air permeable, porous barrier against intrusion of water with surface tension.

11. A material according to claim 1, **characterized in that** it is in admixture with graphite or iron oxide and, optionally, with earth colours or fat colours.

12. A material according to claim 1, **characterized in that** it appears as a powder or as an aqueous emulsion.

13. An application of a material according to claim 1, **characterized in that** it is used in the manner or with the purpose specified in any of the claims 2-11.

14. An application according to claim 12, **characterized in that** the material according to claim 6 is used for full or partial encapsulation of granular fertilizers, weed killers, road salt, washing powder or drugs.

15. An application of the material according to claim 1, **characterized in that** the material in admixture with moulding sand or other or further fillers is used for making mould or core elements for use in metal casting, such elements after use being reproduced by remelting of the wax for renewed use.

16. An application according to claim 13, **characterized in that** the material according to claim 11 is used, with a desired colour, for coating of sand or other granular materials adapted to be laid out on tennis courts or at other relevant areas, optionally in flower bowls.

## Patentansprüche

1. Aufbau-, Form- oder Beschichtungs- und/oder Imprägniermaterial des Typs "modifiziertes Wachs", bevorzugt basierend auf Paraffinwachs, das, zum Beispiel durch Mischung von Polymeren, erhöhte Härte und einen höheren Schmelzpunkt als natürliches Wachs zeigt, **dadurch gekennzeichnet, daß** das Wachsmaterial so weitgehend mit umweltneutralen Additiven modifiziert ist, daß es als ein hartes Material erscheint, das einen Penetrationswert unter 6, bevorzugt im Bereich von 0,5 bis 4 nach dem ASTM-Standard D 1321 bzw. einen Schmelzpunkt über 70°C, bevorzugt im Bereich von 80-120°C, aufweist.

2. Material nach Anspruch 1, **dadurch gekennzeichnet, daß** es als Platten- oder Blockmaterial zur weiteren Bearbeitung in Gebrauchsgegenstände vorliegt.

3. Material nach Anspruch 1, **dadurch gekennzeichnet, daß** es in einer ausgeformten Form als Gebrauchsgegenstand, optional als Mischung mit Füllmaterial, vorliegt.

4. Material nach Anspruch 1, **dadurch gekennzeichnet, daß** es als Korrosionsschutzschichtmaterial auf Oberflächen anderer Materialien, wie Beton, Metall oder Holz, vorliegt.

5. Material nach Anspruch 1, **dadurch gekennzeichnet, daß** es als granuläres Material zum Formen oder Auslegen mit oder ohne einbezogenes Füllmaterial vorliegt.

6. Material nach Anspruch 1, **dadurch gekennzeichnet, daß** es als vollständige oder teilweise Filmschicht Teilchen anderer Materialien umgebend vorliegt, von denen gewünscht wird, dass sie aktive Substanzen in verzögerter Art und Weise freisetzen.

7. Material nach Anspruch 6, **dadurch gekennzeichnet, daß** dieses als Beschichtung auf granulärem Material, wie Kunstdünger, Waschpulver, Streusalz oder anderen Materialien mit erwünschtem Langzeiteffekt vorliegt.

8. Material nach Anspruch 1, **dadurch gekennzeichnet, daß** es als Schmelzsicherungsmaterial im Zusammenhang mit Feuer oder Überhitzung vorliegt.

9. Material nach Anspruch 1, **dadurch gekennzeichnet, daß** es als Schicht auf Teilchen vorliegt, die durch Erwärmen, um das Wachs zu schmelzen, zusammengeklebt werden.

10. Material nach Anspruch 1, **dadurch gekennzeichnet, daß** es im Zusammenhang mit Füllmaterial eine luftdurchlässige poröse Sperrschicht gegen Eindringen von Wasser mit Oberflächenspannung ausbildet.

11. Material nach Anspruch 1, **dadurch gekennzeichnet, daß** es in Mischung mit Graphit oder Eisenoxid und gegebenenfalls mit Mineralfarbstoffen oder Fettfarben vorliegt.

12. Material nach Anspruch 1, **dadurch gekennzeichnet, daß** es als ein Pulver oder als eine wäßrige Emulsion vorliegt.

13. Verwendung eines Materials nach Anspruch 1, **dadurch gekennzeichnet, daß** es in der Art und Weise oder für den nach einem der Ansprüche 2 bis 11 spezifizierten Zweck eingesetzt wird.

14. Verwendung nach Anspruch 12, **dadurch gekennzeichnet, daß** das Material nach Anspruch 6 für vollständige oder teilweise Einkapselung von granulären Düngemitteln, Unkrautbekämpfungsmitteln, Streusalz, Waschpulver oder Arzneimitteln eingesetzt wird.

15. Verwendung des Materials nach Anspruch 1, **dadurch gekennzeichnet, daß** das Material in Mischung mit Formsand oder anderen oder weiteren Füllstoffen eingesetzt wird, um Form- oder Kernelemente für den Einsatz beim Metallgießen herzustellen, wobei derartige Elemente nach der Verwendung durch erneutes Schmelzen des Wachses für den erneuten Gebrauch wieder erzeugt werden.

16. Verwendung nach Anspruch 13, **dadurch gekennzeichnet, daß** das Material nach Anspruch 11 eingesetzt wird, mit einer gewünschten Farbe, zum Beschichten von Sand oder anderen granulären Materialien, die angepaßt sind, um auf Tennisplätzen oder auf anderen relevanten Bereichen, gegebenenfalls in Blumentöpfen, ausgelegt zu werden.

## Revendications

1. Matériau de construction, de moulage ou de revêtement et/ou d'imprégnation du type "cire modifiée", de préférence à base d'une cire de paraffine qui, par exemple par mélange de polymères, présente une dureté accrue et un point de fusion plus élevé que la cire naturelle, **caractérisé en ce que** le matériau de type cire est si largement modifié par des additifs neutres au plan environnemental qu'il ressemble à un matériau dur, avec un indice de pénétration inférieur à 6, de préférence dans la plage de 0,5 à 4, selon la norme ASTM D 1321 ou, respectivement, avec un point de fusion supérieur à 70°C, de préférence dans la plage de 80 à 120°C.

2. Matériau selon la revendication 1, **caractérisé en ce qu'**il ressemble à un matériau en plaque ou en bloc pour un usinage plus poussé pour donner des objets de consommation courante.

3. Matériau selon la revendication 1, **caractérisé en ce qu'**il ressemble à une forme moulé en tant qu'objet de consommation courante, éventuellement en mélange avec un matériau de charge.

4. Matériau selon la revendication 1, **caractérisé en ce qu'**il ressemble à un matériau de revêtement de protection contre la corrosion sur des surfaces d'autres matériaux, tels que le béton, le métal ou le bois.

5. Matériau selon la revendication 1, **caractérisé en ce qu'**il ressemble à un matériau granulaire pour moulage ou couchage, avec ou sans matériau de charge incorporé.

6. Matériau selon la revendication 1, **caractérisé en ce qu'**il ressemble à un revêtement en film enrobant totalement ou partiellement des particules d'autres matériaux, qui sont censés délivrer des substances actives de manière retardée.

7. Matériau selon la revendication 6, **caractérisé en ce qu'**il ressemble à un revêtement sur un matériau granulaire tel que des engrais synthétiques, une poudre de lavage, du sel pour les routes ou d'autres matériaux ayant un effet à long terme souhaitable.

8. Matériau selon la revendication 1, **caractérisé en ce qu'**il ressemble à un matériau fusible par fusion en relation avec un incendie ou une surchauffe.

9. Matériau selon la revendication 1, **caractérisé en ce qu'**il ressemble à un revêtement sur des particules devant être liées les unes aux autres par chauffage pour faire fondre la cire.

10. Matériau selon la revendication 1, **caractérisé en ce que**, en relation avec un matériau de charge, il forme une barrière poreuse perméable à l'air, contre l'intrusion d'eau ayant une tension superficielle.

11. Matériau selon la revendication 1, **caractérisé en ce qu'**il est en mélange avec du graphite ou de l'oxyde de fer et, éventuellement, avec des couleurs à base de pigments minéraux ou des couleurs solubles dans des matières grasses.

12. Matériau selon la revendication 1, **caractérisé en ce qu'**il ressemble à une poudre ou à une émulsion aqueuse.

13. Application d'un matériau selon la revendication 1, **caractérisée en ce qu'**il est utilisé de la manière ou dans le but indiqué dans l'une quelconque des revendications 2 à 11.

14. Application selon la revendication 12, **caractérisé en ce que** le matériau selon la revendication 6 est utilisé pour encapsuler totalement ou partiellement des engrais granulaires, des herbicides, du sel pour les routes, une poudre de lavage ou des médicaments.

15. Application du matériau selon la revendication 1, **caractérisée en ce que** le matériau en mélange avec du sable de moulage ou avec d'autres charges encore est utilisé pour fabriquer des éléments de moule ou de noyau destinés à une utilisation dans la coulée de métaux, ces éléments après emploi étant produits de nouveau par refonte de la cire pour une nouvelle utilisation.

16. Application selon la revendication 13, **caractérisée en ce que** le matériau selon la revendication 11 est utilisé, avec une couleur souhaitée, pour le revêtement de sable ou d'autres matériaux granulaires conçus pour être étalés sur des courts de tennis ou sur d'autres zones concernées, éventuellement dans des vases.
